# EUROPEAN PATENT APPLICATION

(11) **EP 4 586 216 A1**
(43) Date of publication of application: **16.07.2025**
(21) Application number: 24305071.3
(22) Date of filing: 10.01.2024
(51) Int. Cl.: G06V 10/774

(54) **DATASET AUGMENTATION METHOD, AND ASSOCIATED COMPUTER PROGRAM AND FRAMEWORK**

(71) Applicant: BULL SAS, 78340 Les Clayes-Sous-Bois (FR)
(72) Inventor: MORIN, Guillaume, 38000 Grenoble (FR); PAULETTO, Loïc, 38100 Grenoble (FR); WINCKLER, Nicolas, 38190 Villard Bonnot (FR)
(74) Representative: IPAZ

(57) **Abstract**

The invention relates to a method (20) for augmenting a dataset (8) including at least one image, each image being associated with a corresponding predetermined set of labels, each label representing a corresponding object depicted therein,
the method (20) including the following steps:
- using a computer vision model (10), performing inference on the dataset to compute an inferred set of labels for each image;
- selecting a subset of the dataset comprising at least one image for which the inferred set of labels is different from the predetermined set of labels;
- applying an image-to-text generation model (12) to each image of the selected subset to compute a corresponding textual description;
- providing each image of the selected subset along with the corresponding textual description, to a text-to-image generation model (14), thereby computing at least one synthetic image; and
- adding each computed synthetic image to the dataset.

## Description

### Field of the invention

The present invention relates to a computer-implemented dataset augmentation method for augmenting a predetermined dataset including at least one image.

The invention further relates to a corresponding computer program and a corresponding framework.

The invention applies to the field of computer science, and more specifically to the field of computer vision.

### Background

Artificial intelligence models require to be trained based on a substantial amount of data to learn to perform a specific task. Therefore, despite the increasing availability of data (especially on the internet), it is often challenging to gather all the necessary data to achieve good learning performance.

To address this issue, data augmentation techniques have become widespread, allowing for an increase in the available data based on already available data.

For instance, in the field of computer vision, simple augmentation techniques may include performing rotations, horizontal flips, or scale changes on an image. Other simple augmentation technique may include adding noise, blur, or contrast to the image. These augmented images enrich the variability of the training data, enabling models to generalize better and accommodate for changes in image acquisition conditions.

Recently, more advanced augmentation techniques have been designed, and include generating synthetic images using generative models, such as diffusion models. More precisely, generation of relevant images may involve:
- text-to-image generation: in this case, the synthetic images are generated based on textual descriptions of images to be generated; or
- image-to-image generation: in this case, the synthetic images are generated by transforming a source image into the synthetic image. More precisely, the source image is used as a reference, from which certain properties (such as semantics and style) are extracted to produce the synthetic image.

However, such methods are not entirely satisfactory.

Indeed, diffusion models are particularly sensitive to the parameters used during inference, the careful determination of these parameters beforehand is crucial for creating a diverse set of viable new data for training.

Moreover, such methods do not prevent non-beneficial images to be added to the training data, which would result in an increase in complexity within the model that is associated with an inefficient allocation of resources.

A purpose of the present invention is to overcome at least one of these drawbacks.

Another purpose of the invention is to provide a method for augmenting a training dataset which simultaneously:
- minimizes the amount of non-beneficial images added to said training dataset; and
- results in an optimized allocation of resources during the increase in complexity of a computer vision model that results from a training based on said augmented training dataset.

### Summary of the invention

To this end, the present invention concerns a method of the aforementioned type, each image being associated with a corresponding predetermined set of labels, each label of the predetermined set of labels being representative of a corresponding object depicted in said image, the dataset augmentation method including:
- an inference step comprising performing inference on the predetermined dataset using a computer vision model to compute, for each image of the predetermined dataset, a corresponding inferred set of labels;
- a selection step comprising selecting a subset of the predetermined dataset, the selected subset comprising at least one image of the predetermined dataset for which the corresponding inferred set of labels is different from the corresponding predetermined set of labels;
- a textual description step comprising applying an image-to-text generation model to each image of the selected subset to compute a textual description of said image;
- a synthetic image generation step comprising, for each image of the selected subset, providing said image and the corresponding computed textual description to a text-to-image generation model, thereby computing at least one synthetic image; and
- a dataset augmentation step comprising adding, to the predetermined dataset, at least one computed synthetic image.

Indeed, such method allows to directly reuse images representing a small learning gain to augment (*i.e*., enrich) the dataset, while preserve the domain, style. Consequently, additional gains on the performance of the computer vision model may be expected way retraining based on the augmented dataset.

Moreover, such augmentation may be performed with more or less some degrees of freedom, depending on a tuning of the text-to-image generation model, thereby further allowing to enrich the dataset.

According to other advantageous aspects of the invention, the method includes one or several of the following features, taken alone or in any technically possible combination:
each synthetic image is associated with the predetermined set of labels corresponding to the respective image of the selected subset;
the dataset augmentation method further includes an image filtering step comprising determining, for each computed synthetic image, a corresponding quality score, each synthetic image added to the predetermined dataset, during the dataset augmentation step, having a quality score within a predetermined range;
for each image of the selected subset, each corresponding synthetic image corresponds to:
   - a respective guidance value provide as input to the text-to-image generation model, and representative of a degree to which the text-to-image generation model is constrained by the computed textual description; and/or
   - a respective strength value provided as input to the text-to-image generation model, and representative of an intensity of modifications made by the text-to-image generation model to the selected image to compute the corresponding synthetic image;
the dataset augmentation method further includes a training step comprising training the computer vision model based on the augmented dataset, each image of the augmented training dataset being provided as input, and each respective set of labels being provided as an expected output;
the predetermined dataset is divided into a training set of data and a validation set of data, and:
   - the inference step is performed on the validation set of data of the predetermined dataset; and
   - the dataset augmentation step comprises adding the at least on computed synthetic image to the training set of data of the predetermined dataset.

According to another aspect of the same invention, it is proposed a computer program comprising instructions, which when executed by a computer, cause the computer to carry out the steps of the dataset augmentation method as defined above.

The computer program may be in any programming language such as C, C++, JAVA, Python, etc.

The computer program may be in machine language.

The computer program may be stored, in a non-transient memory, such as a USB stick, a flash memory, a hard-disc, a processor, a programmable electronic chop, etc.

The computer program may be stored in a computerized device such as a smartphone, a tablet, a computer, a server, etc.

According to another aspect of the same invention, it is proposed a framework for augmenting a predetermined dataset including at least one image, each image being associated with a corresponding predetermined set of labels, each label of the predetermined set of labels being representative of a corresponding object depicted in said image, the framework comprising a processing unit configured to:
- perform inference on the predetermined dataset using a computer vision model to compute, for each image of the predetermined dataset, a corresponding inferred set of labels;
- select a subset of the predetermined dataset, the selected subset comprising at least one image of the predetermined dataset for which the corresponding inferred set of labels is different from the corresponding predetermined set of labels;
- apply an image-to-text generation model to each image of the selected subset to compute a textual description of said image;
- for each image of the selected subset, provide said image and the corresponding computed textual description to a text-to-image generation model, thereby computing at least one synthetic image; and
- add, to the predetermined dataset, at least one computed synthetic image.

The framework may be a personal device such as a smartphone, a tablet, a smartwatch, a computer, any wearable electronic device, etc.

The framework according to the invention may execute one or several applications to carry out the method according to the invention.

The framework according to the invention may be loaded with, and configured to execute, the computer program according to the invention.

### Brief description of the drawings

Other advantages and characteristics will become apparent on examination of the detailed description of an embodiment which is in no way limitative, and the attached figures, where:
Figure 1 is a schematic representation of a framework according to the invention;
Figure 2 is a workflow of a training method performed by the framework of figure 1;
Figure 3 is an example of an image provided as input to the framework of figure 1; and
Figure 4 is an example of a synthetic image computed by the framework of figure 1, based on the image of figure 3.

It is well understood that the embodiments that will be described below are in no way limitative. In particular, it is possible to imagine variants of the invention comprising only a selection of the characteristics described hereinafter, in isolation from the other characteristics described, if this selection of characteristics is sufficient to confer a technical advantage or to differentiate the invention with respect to the state of the prior art. Such a selection comprises at least one, preferably functional, characteristic without structural details, or with only a part of the structural details if this part alone is sufficient to confer a technical advantage or to differentiate the invention with respect to the prior art.

In the FIGURES, elements common to several figures retain the same reference.

### Detailed description

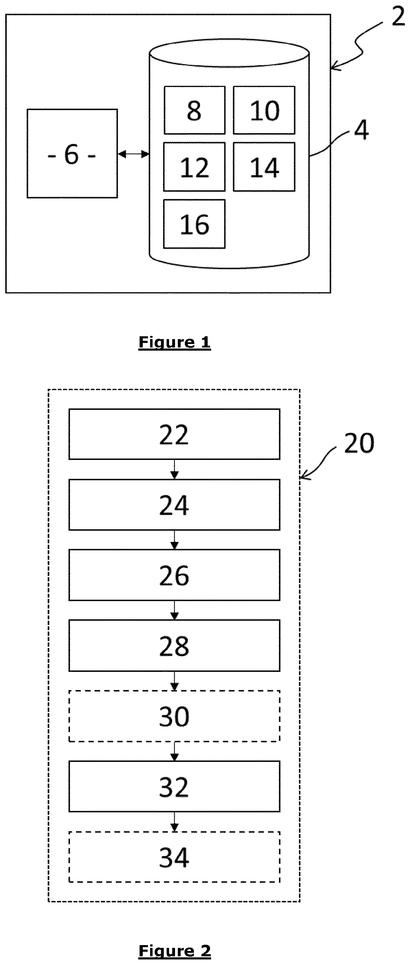

A framework 2 according to the invention is shown on figure 1.

The framework 2 is configured to enrich a predetermined dataset using techniques described below.

Preferably, the framework 2 is also configured to train an artificial intelligence model, especially a computer vision model, based on the enriched dataset.

As shown on figure 1, the framework 2 includes a memory 4 and a processing unit 6 linked to one another.

### Memory 4

More precisely, the memory 4 is configured to store a predetermined dataset 8 including at least one image. The memory 4 is further configured to store the aforementioned computer vision model 10, an image-to-text generation model 12 and a text-to-image generation model 14.

Preferably, the memory 4 is further configured to store an image quality assessment model 16.

### Dataset 8

As mentioned previously, the dataset 8 includes at least one image. Furthermore, each of said images is associated with a corresponding predetermined set of labels. In other words, each image is labeled. For instance, for each image of the dataset 8, at least one label of the corresponding predetermined set of labels represents a class of a corresponding object shown in said image. Alternatively, or in addition, each label may represent a segmentation mask, coordinates of a corresponding bounding box, and so on.

For instance, each image is stored, in the dataset 8, in association with the corresponding predetermined set of labels.

Preferably, the dataset 8 is divided in a training set of data and a validation set of data. In this case, the training set of data and the validation set of data are preferably distinct from each other.

### Computer vision model 10

The computer vision model 10 is an artificial intelligence model classically configured to receive, as input, an image (or a plurality of images), and to output, for each received image, a result including an inferred set of labels representative of features of said image (or plurality of images). For instance, the computer vision model 10 is configured to perform at least one of classification, detection, segmentation, or even depth estimation, based on at least one input image.

For instance, in the case of classification, the computer vision model 10 is configured to receive, as input, at least one image, and to output, for each received image, at least one label, each label being indicative of a class to which belongs an object represented in said image that has been detected by the computer vision model 10.

As another example, in the case of detection, the computer vision model 10 is configured to receive, as input, at least one image, and to output, for each received image, at least one label, each label being indicative of coordinates of a bounding box associated with an object represented in said image and that has been detected by the computer vision model 10.

For instance, the computer vision model 10 is a neural network designed according to the YOLO ("You Only Look Once") architecture, or is a residual neural network (also known as "ResNet").

Preferably, the computer vision model 10 stored in the memory 4 has been previously trained, during a preliminary training step, based on a training dataset. More precisely, the training dataset includes at least one training image, associated with a corresponding predetermined set of labels. In this case, during the preliminary training step, each training image is provided as an input to the computer vision model 10, and each corresponding predetermined set of labels is provided as an expected output for said training image.

As an example, in the case where the computer vision model 10 is configured to perform classification, each label of the predetermined set of labels associated to any given training image represents a class of a corresponding object that is represented in (*i.e*., shown on) said training image.

Preferably, the training dataset is the aforementioned training set of data of the dataset 8 stored in the memory 4.

### Image-to-text generation model 12

The image-to-text generation model 12 is an artificial intelligence model that is configured to receive an image as an input, and to provide, as a corresponding output, a text comprising a description of a scene depicted on said image, for instance a description of each object depicted thereon, as well as, preferably, a spatial relationship between said objects and/or features of the image itself (such as a size, a resolution, and so on). Said text is, hereinafter, referred to as "textual description".

Such image-to-text generation model (which is known to the person skilled in the art) has, for instance, been previously trained to establish a correlation between images and corresponding text.

Preferably, the image-to-text generation model 12 is a BLIP-2 model, described by Junnan Li et al. in the digital prepublication "BLIP-2: Bootstrapping Language-Image Pre-training with Frozen Image Encoders and Large Language Models", referenced arXiv:2301.12597. The BLIP-2 model is considered as providing the best results for generating the aforementioned textual description based on input images.

### Text-to-image generation model 14

The text-to-image generation model 14 is a generative artificial intelligence model that is configured to:
- receive, as input, an image and a textual description of a content of said image; and
- provide, as output, at least one synthetic image depending on the input image and including the features described in the input textual description.

Preferably, the text-to-image generation model 14 is a diffusion model, which has better performances than generative adversarial networks. For instance, the text-to-image generation model 14 is Stable Diffusion, published on: https://github.com/Stability-AI/generative-models

Preferably, the text-to-image generation model 14 is also associated with a guidance and/or a strength (known to the person skilled in the art), which may be tuned by a user to adjust a behavior of the text-to-image generation model 14.

More precisely, the text-to-image generation model 14 may also be configured to receive, as input, a guidance value, representative of a degree to which the text-to-image generation model 14 is constrained by the textual description. Alternatively, or in addition, the text-to-image generation model 14 may also be configured to receive, as input, a strength value, representative of an intensity of modifications made by the text-to-image generation model 14 to the selected image, based on the corresponding textual description, to compute the corresponding synthetic image.

In this case, the memory 4 may further store P predetermined guidance values and/or Q predetermined strength values (P, Q being integers).

### Image quality assessment model 16

The image quality assessment model 16 is configured to receive an image as input, and to provide, as an output, a corresponding quality score.

For instance, the For instance, the processing unit 6 is configured to compute, as the quality score of the synthetic image, a corresponding inception score, a corresponding CLIP score or a corresponding Fréchet inception distance.

### Processing unit 6

The processing unit 6 is configured to perform a dataset augmentation method 20 (also referred to as "augmentation method"), shown on figure 2, in order to expand the dataset 8.

As shown on this figure, the augmentation method 20 includes an inference step 22, a selection step 24, a textual description step 26, a synthetic image generation step 28 and a dataset augmentation step 32.

Advantageously, the augmentation method 20 also includes an optional image filtering step 30, between the synthetic image generation step 28 and the dataset augmentation step 32.

Furthermore, the augmentation method 20 may also advantageously include an optional training step 34, after the dataset augmentation step 32.

### Inference step 22

For each image of the dataset 8, the processing unit 6 is configured to compute, during the inference step 22, a corresponding inferred set of labels.

More precisely, the processing unit 6 is configured to implement the computer vision model 10 stored in the memory 4 on the dataset 8, during the inference step 22, in order to compute each inferred set of labels. Especially, the processing unit 6 is configured to provide to the computer vision model 10, as input, each image of the dataset 8, the corresponding output being the associated inferred set of labels.

Preferably, the inference step 22 is more specifically performed on each image of the validation set of data of the dataset 8, but not on the images of the training set of data.

### Selection step 24

Moreover, the processing unit 6 is configured to select, during the selection step 24, based on a result of the inference step 22, a subset of the dataset 8, the selected subset including at least one image of the dataset 8.

Especially, the selected subset includes at least one image of the dataset 8 for which the corresponding inferred set of labels, computed during the inference step 22, is different from the associated predetermined set of labels.

### Textual description step 26

Furthermore, the processing unit 6 is configured to implement, during the textual description step 26, the image-to-text generation model 12 based on the images of said selected subset, in order to compute respective textual descriptions.

More precisely, for each image of the selected subset, the processing unit 6 is configured to apply, during the textual description step 26, the image-to-text generation model 12 to said image, in order to compute the corresponding textual description. In other words, the processing unit 6 is configured to provide to the image-to-text generation model 12, as input, each image of the subset that has been selected during the selection step 24. In this case, for each image of the selected subset, the corresponding output is the corresponding textual description.

As mentioned previously, the textual description of any given image includes a text (also referred to as "textual description") comprising a description of a scene depicted on said selected image.

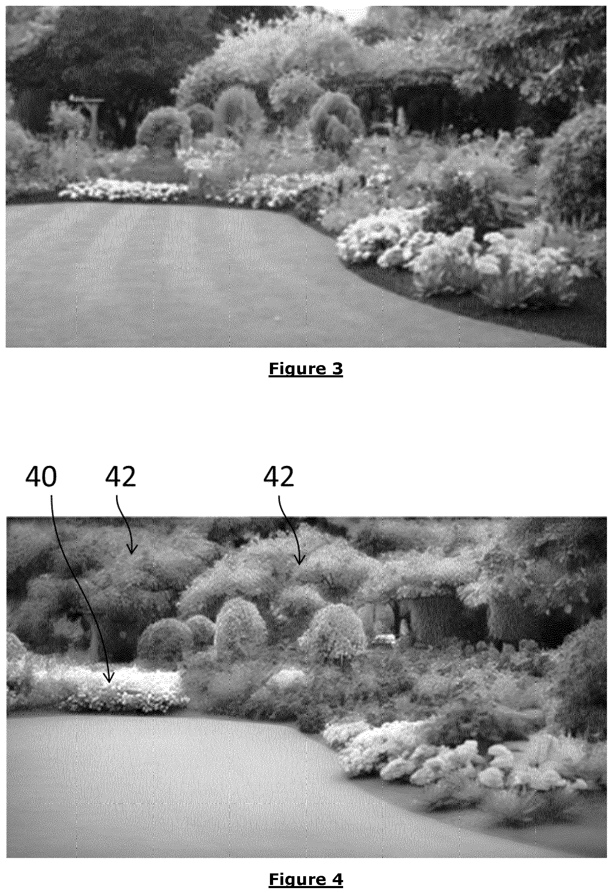

As an example, the image of figure 3 is provided as input, during the textual description step 26, to the image-to-text generation model 12. In this case, the corresponding textual description provided by the image-to-text generation model 12 is: "A photo of a garden with roses, 4K photo, highly detailed".

### Synthetic image generation step 28

Moreover, the processing unit 6 is configured to implement, during the synthetic image generation step 28, the text-to-image generation model 14 based on the images of the selected subset and the corresponding computed textual descriptions, so as to compute at least one synthetic image.

More precisely, the processing unit 6 is configured to provide, during the synthetic image generation step 28, each image of the selected subset, along with the corresponding computed textual description, as input to the text-to-image generation model 14, so as to provide at least one synthetic image as an output.

Advantageously, for each selected image and corresponding textual description provided to the text-to-image generation model 14, the processing unit 6 is further configured to provide as input, to said text-to-image generation model 14, at least one guidance value and/or at least one strength value. In this case, for each selected image, each corresponding synthetic image corresponds to a respective guidance value and/or a respective strength value provided as input to the text-to-image generation model 14.

Such feature is advantageous, as it allows to tune a behavior of the text-to-image generation model 14, thereby resulting in the generation of a plurality of synthetic images, potentially having different features, based on a single selected image.

For instance, in the case where the memory 4 stores P predetermined guidance values and/or Q predetermined strength values, the processing unit 6 may be configured to provide each of the P predetermined guidance values and/or Q predetermined strength values to the text-to-image generation model 14, thereby resulting in up to P*Q computed synthetic images.

As an example, during the synthetic image generation step 28, the image of figure 3 is provided as input to the text-to-image generation model 14, along with the aforementioned corresponding exemplary textual description (*i.e*., "A photo of a garden with roses, 4K photo, highly detailed"). In this case, a corresponding synthetic image generated by the text-to-image generation model 14 is shown on figure 4. As can be seen, the text-to-image generation model 14 has enhanced the presence of roses in the synthetic image (for instance in bushes 40 and trees 42) with respect to the original image.

### Image filtering step 30

Advantageously, the processing unit 6 is configured to compute, during the image filtering step 30, a quality score for each computed synthetic image.

For instance, the processing unit 6 is configured to compute, as the quality score of the synthetic image, a corresponding inception score, a corresponding CLIP score or a corresponding Fréchet inception distance.

In this case of the Fréchet inception distance, the processing unit 6 may be further configured to compute the Fréchet inception distance of a synthetic image based, also, on the corresponding image of the selected subset.

As a non-limiting example, the processing unit 6 is configured to apply the aforementioned image quality assessment model 16 to each computed synthetic image in order to determine the corresponding quality score.

Moreover, the processing unit is further configured to discard (for instance, to delete) each synthetic image having a quality score outside a predetermined range. In this case, a quality score outside the predetermined range may be indicative of a quality of the synthetic image that is too low.

### Dataset augmentation step 32

Moreover, the processing unit 6 is configured to add, during the dataset augmentation step 32, at least one computed synthetic image to the dataset 8, thereby resulting in an augmented dataset. More precisely, the processing unit 6 is configured to store at least one synthetic image in the dataset 8.

Preferably, during the dataset augmentation step 32, each synthetic image added to the dataset 8 is, more specifically, added to the training set of data of the dataset 8, but not to the validation set of data.

Preferably, the processing unit 6 is configured to store, in the memory 4, each synthetic image in association with the set of labels corresponding to the respective selected image (*i.e*., the image of the dataset 8 that has served as a base to generate said synthetic image). Such association is preferably performed when the predetermined set of labels comprises classes, that is when the computer vision model 10 is a classification model.

Advantageously, in the case where the processing unit 6 has performed the image filtering step 30, the processing unit 6 is configured to add, to the dataset 8, only synthetic images having a quality score within the predetermined range. This feature is advantageous, as it allows to maintain consistency in the dataset 8, by preventing training data having undesired features (*i.e*., images of insufficient quality) to be added to said dataset.

### Training step 34

Advantageously, the processing unit 6 is configured to further train the computer vision model 10, during the training step 34.

More precisely, the processing unit 6 is configured to train the computer vision model 10 based on the augmented dataset. In other words, the processing unit 10 is configured to provide, to the computer model vision 10, each image of the augmented training dataset 8 as input, and each respective set of labels as an expected output, and to tune coefficients of the computer vision model 10 to minimize a loss function representative of a difference between the expected sets of labels and the computed sets of inferred labels.

Alternatively, the processing unit 6 is configured to train the computer vision model 10 based only on a part of the augmented dataset 8, said part of the augmented dataset 8 comprising at least one synthetic image that has been stored in the dataset 8 during the dataset augmentation step 34.

As another alternative, the processing unit 6 is configured to train the computer vision model 10 based only on the augmented training set of data of the augmented dataset 8.

Performing the training step 34 is advantageous, as it further optimizes the computer model vision 10 based on a set of images generated from one or several initial images for which performance of said computer vision model 10 was deemed unsatisfactory. Consequently, performance of the computer vision model should improve.

### Operation

Operation of the framework 2 will now be disclosed in relation to figures 1 and 2.

During a preliminary training step, the computer vision model 10 is trained, based on a training dataset, and stored in the memory 4.

Then, during the inference step 22, the processing unit 6 implements the computer vision model 10 to compute, for each image of the dataset 8, a corresponding inferred set of labels.

Then, during the selection step 24, the processing unit 6 selects a subset of the dataset 8. The selected subset includes at least one image of the dataset 8 for which the corresponding inferred set of labels, computed during the inference step 22, is different from the associated predetermined set of labels.

Then, during the textual description step 26, , the processing unit 6 implements the image-to-text generation model 12 based on the images of the selected subset to compute respective textual descriptions.

Then, during the synthetic image generation step 28, the processing unit 6 implements the text-to-image generation model 14 based on the images of the selected subset and the corresponding computed textual descriptions, in order to compute at least one synthetic image.

Then, during the optional image filtering step 30, the processing unit 6 computes, for each synthetic image, a corresponding quality score. In this case, the processing unit 6 further discards each synthetic image having a quality score outside the predetermined range.

Then, during the dataset augmentation step 32, the processing unit 6 adds at least one computed synthetic image to the dataset 8, to obtain an augmented dataset.

In the case where the image filtering step 30 has been performed, each synthetic image added to the dataset 8 is a synthetic images that has not been discarded (*i.e*., a synthetic image having a quality score within the predetermined range).

Then, during the optional training step 34, the processing unit 6 further trains the computer vision model 10 based on the on augmented dataset.

Of course, the invention is not limited to the examples detailed above.

## Claims

1. A computer-implemented dataset augmentation method (20) for augmenting a predetermined dataset (8) including at least one image, each image being associated with a corresponding predetermined set of labels, each label of the predetermined set of labels being representative of a corresponding object depicted in said image,
the dataset augmentation method (20) including:
- an inference step (22) comprising performing inference on the predetermined dataset (8) using a computer vision model (10) to compute, for each image of the predetermined dataset (8), a corresponding inferred set of labels;
- a selection step (24) comprising selecting a subset of the predetermined dataset (8), the selected subset comprising at least one image of the predetermined dataset (8) for which the corresponding inferred set of labels is different from the corresponding predetermined set of labels;
- a textual description step (26) comprising applying an image-to-text generation model (12) to each image of the selected subset to compute a textual description of said image;
- a synthetic image generation step (28) comprising, for each image of the selected subset, providing said image and the corresponding computed textual description to a text-to-image generation model (14), thereby computing at least one synthetic image; and
- a dataset augmentation step (32) comprising adding, to the predetermined dataset (8), at least one computed synthetic image.

2. The dataset augmentation method (20) according to claim 1, wherein each synthetic image is associated with the predetermined set of labels corresponding to the respective image of the selected subset.

3. The dataset augmentation method (20) according to claim 1 or 2, further including an image filtering step (30) comprising determining, for each computed synthetic image, a corresponding quality score, each synthetic image added to the predetermined dataset (8), during the dataset augmentation step (32), having a quality score within a predetermined range.

4. The dataset augmentation method (20) according to any one of claims 1 to 3, wherein, for each image of the selected subset, each corresponding synthetic image corresponds to:
- a respective guidance value provide as input to the text-to-image generation model (14), and representative of a degree to which the text-to-image generation model (14) is constrained by the computed textual description; and/or
- a respective strength value provided as input to the text-to-image generation model (14), and representative of an intensity of modifications made by the text-to-image generation model (14) to the selected image to compute the corresponding synthetic image.

5. The dataset augmentation method (20) according to any one of claims 1 to 4, further including a training step (34) comprising training the computer vision model (10) based on the augmented dataset, each image of the augmented training dataset being provided as input, and each respective set of labels being provided as an expected output.

6. The dataset augmentation method (20) according to any one of claims 1 to 5, wherein the predetermined dataset (8) is divided into a training set of data and a validation set of data, and wherein:
- the inference step (22) is performed on the validation set of data of the predetermined dataset (8); and
- the dataset augmentation step (32) comprises adding the at least on computed synthetic image to the training set of data of the predetermined dataset (8).

7. Computer program comprising instructions, which when executed by a computer, cause the computer to carry out the steps of the dataset augmentation method (20) according to any one of claims 1 to 6.

8. A framework for augmenting a predetermined dataset (8) including at least one image, each image being associated with a corresponding predetermined set of labels, each label of the predetermined set of labels being representative of a corresponding object depicted in said image,
the framework comprising a processing unit (6) configured to:
- perform inference (22) on the predetermined dataset (8) using a computer vision model (10) to compute, for each image of the predetermined dataset (8), a corresponding inferred set of labels;
- select (24) a subset of the predetermined dataset (8), the selected subset comprising at least one image of the predetermined dataset (8) for which the corresponding inferred set of labels is different from the corresponding predetermined set of labels;
- apply (26) an image-to-text generation model (12) to each image of the selected subset to compute a textual description of said image;
- for each image of the selected subset, provide (28) said image and the corresponding computed textual description to a text-to-image generation model (14), thereby computing at least one synthetic image; and
- add (32), to the predetermined dataset (8), at least one computed synthetic image.
